# DEMANDE DE BREVET EUROPEEN

(11) **EP 0 720 034 A1**
(43) Date de publication de la demande: **03.07.1996**
(21) Numéro de dépôt: 95402972.4
(22) Date de dépôt: 29.12.1995
(51) Int. Cl.: G02B 6/44

(54) **Câble à fibres optiques et procédé de fabrication d'un tel câble**

(30) Priorité: 02.01.1995 FR 9500010
(71) Demandeur: ALCATEL CABLE, F-92111 Clichy Cédex (FR)
(72) Inventeur: Personne, Jacques, F-78700 Conflans Ste Honorine (FR); Gaillard, Pierre, F-95000 Cergy (FR); Sevoz, Laurent, F-93200 Saint Denis (FR); Lambert, Michel, F-95100 Argenteuil (FR)
(74) Mandataire: Feray, Valérie

(57) **Abrégé**

La présente invention concerne un câble à fibres optiques comprenant au moins un élément optique (44, 46) et au moins un élément de renfort (40, 42) insérés dans des logements respectifs (30, 32, 34, 36) d'une gaine (48) en une matière thermoplastique, les logements étant fermés vis-à-vis de l'extérieur du câble.

Selon l'invention, tous les logements (34, 36) des éléments optiques (44, 46) sont en communication les uns avec les autres, au moins deux de tous les logements communiquant l'un avec l'autre, et les éléments contenus dans les logements communiquant les uns avec les autres sont enduits d'un matériau d'enduction (505) empêchant leur adhérence à la gaine (48), de sorte que cette dernière définit une partie centrale (50) à au moins deux branches (500, 502, 504, 506), vide de matière thermoplastique et remplie du matériau d'enduction (505), chaque branche se terminant par l'un des logements en communication avec d'autres logements à l'une de ses extrémités, et ayant son autre extrémité qui rejoint celles des autres branches.

## Description

La présente invention concerne les câbles à fibres optiques et se rapporte en particulier à un câble à au moins un élément optique et un élément de renfort dont l'extrémité est facile et rapide à dénuder, ainsi qu'à un procédé de fabrication d'un tel câble.

Les câbles à fibres optiques de branchement chez l'abonné comportent généralement en plus des fibres optiques, un ou plusieurs éléments de renfort mécaniques ou porteurs qui procurent une certaine raideur au câble. Le rôle des porteurs qui présentent un faible coefficient de dilatation thermique est aussi de limiter les variations de longueur du câble dues aux variations de température ou aux efforts de traction appliqués au câble, qui peuvent également être préjudiciables pour les fibres optiques.

Un tel câble est décrit par exemple dans le document US-5 218 659. Il comprend un élément de renfort central noyé dans une gaine plastique extrudée munie de plusieurs logements fermés vis-à-vis de l'extérieur du câble et ne communiquant pas les uns avec les autres, dans lesquels sont logées des fibres optiques.

Les raccordements à effectuer à l'extrémité des câbles de branchement d'abonné exigent d'avoir accès aux fibres optiques en retirant la gaine en matériau thermoplastique du câble qui les entoure. Avec le câble du document précédent, cette opération est délicate et se fait avec un outil tranchant risquant d'endommager les fibres optiques, même gainées, si elle est effectuée trop rapidement et sans prendre de précautions. Cette opération fréquente en branchement d'abonné entraîne donc un coût de main d'oeuvre élevé si elle est faite avec des temps de raccordement élevés.

C'est pourquoi le but principal de l'invention est de fournir un câble à fibres optiques permettant un dénudage facile et rapide ne risquant pas d'endommager les fibres optiques.

Un autre but de l'invention est de mettre au point un procédé de fabrication d'un tel câble.

La présente invention propose à cet effet un câble à fibres optiques comprenant au moins un élément optique et au moins un élément de renfort insérés dans des logements respectifs d'une gaine en une matière thermoplastique, lesdits logements étant fermés vis-à-vis de l'extérieur du câble,
**caractérisé en ce que** tous les logements desdits éléments optiques sont en communication les uns avec les autres, au moins deux de tous lesdits logements communiquant l'un avec l'autre, et en ce que les éléments contenus dans les logements communiquant les uns avec les autres sont enduits d'un matériau d'enduction empêchant leur adhérence à ladite gaine, de sorte que ladite gaine définit une partie centrale à au moins deux branches, vide de matière thermoplastique et remplie dudit matériau d'enduction, chacune desdites branches se terminant par l'un desdits logements en communication avec d'autres logements à l'une de ses extrémités, et ayant son autre extrémité qui rejoint celles des autres branches.

Grâce au câble de l'invention et à sa partie centrale remplie de matériau d'enduction, il n'est pas nécessaire de découper la gaine au droit des logements contenant les éléments optiques pour les dénuder. Les éléments optiques ne risquent donc pas d'être endommagées pendant le dénudage.

Pour dénuder le câble de l'invention, on peut exercer un effort radialement sur les éléments de renfort, qui ne sont pas fragiles, ce qui provoque notamment une déchirure de la matière thermoplastique aux points faibles de la gaine se trouvant entre les logements des éléments optiques et la périphérie de la gaine.

Lorsqu'au moins un logement d'un élément de renfort communique avec d'autres logement, on peut par exemple découper la gaine au voisinage de cet élément de renfort rapidement et sans grande précaution.

L'invention rend donc le dénudage aisé et rapide.

Le câble peut comporter par exemple deux éléments optiques dont les logements sont diamétralement opposés et deux éléments de renfort dont les logements sont diamétralement opposés orthogonalement aux logements des éléments optiques.

Selon un mode de réalisation avantageux, seuls les logements des éléments optiques communiquent les uns avec les autres, de sorte que la partie centrale a sensiblement la forme d'un I.

Selon un autre mode de réalisation avantageux, tous les logements communiquent les uns avec les autres, de sorte que la partie centrale a sensiblement la forme d'une croix.

Selon un procédé de fabrication d'un câble selon l'invention à l'aide d'une extrudeuse pour extruder ladite gaine en matière thermoplastique, on enduit les éléments optiques d'un matériau d'enduction, puis on extrude ladite matière thermoplastique, en réglant le débit dudit matériau d'enduction en fonction de la pression de la matière thermoplastique dans l'extrudeuse de manière à refouler ledit matériau d'enduction vers la partie centrale se trouvant entre lesdits logements et emprisonner ledit matériau d'enduction dans cette partie centrale à l'aide de la matière thermoplastique.

Ce procédé permet de créer au centre du câble la partie centrale selon l'invention.

Les buts, objets et caractéristiques de la présente invention ressortiront mieux à la lecture de la description qui suit faite en référence au-dessus, dans lesquels :
- la figure 1 représente une coupe transversale d'un câble à fibres optiques selon l'invention,
- la figure 2 représente une coupe transversale d'un deuxième câble à fibres optiques selon l'invention,
- la figure 3 représente schématiquement le montage utilisé pour la fabrication du câble à fibres optiques de la figure 1,
- les figures 4, 5 et 6 représentent les principales étapes mises en oeuvre pour effectuer le dénudage du câble à fibres optiques de la figure 1.

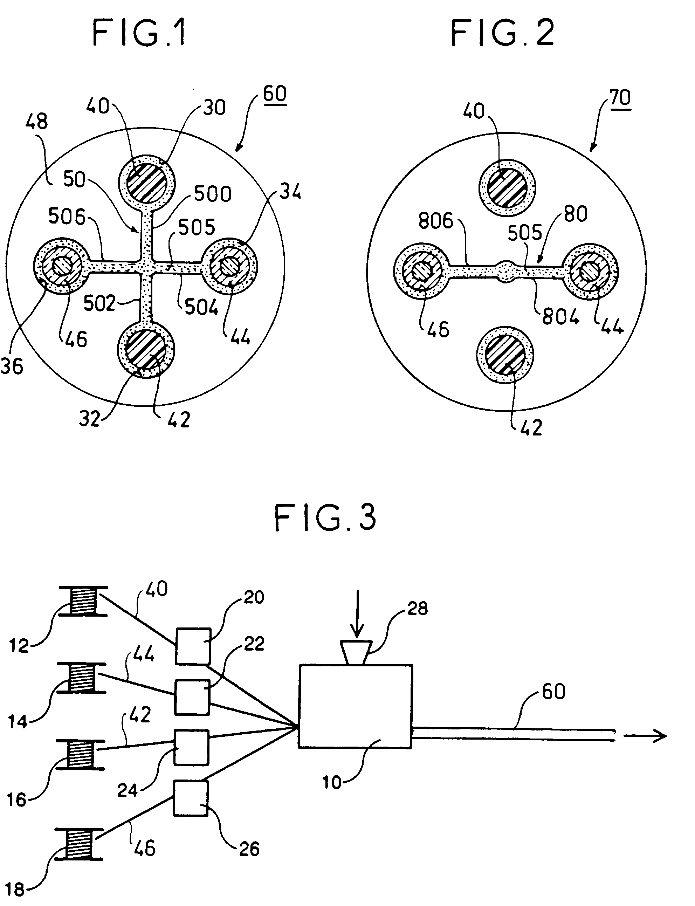

Une coupe transversale d'un câble 60 selon l'invention est illustrée sur la figure 1. Le câble 60 comprend deux éléments de renfort ou porteurs 40, 42 et deux fibres optiques 44 et 46 installés respectivement à l'intérieur de logements 30, 32, 34, 36 définis dans une gaine 48 sensiblement cylindrique en matière thermoplastique. Les éléments de renfort 40, 42 et les fibres optiques 44, 46 sont enduits d'un matériau d'enduction 505 les empêchant d'adhérer à la gaine 48. Ce matériau d'enduction peut être par exemple du type petroleum jelly, graisse de silicone, ou de manière plus générale gras et visqueux, de manière à ne pas adhérer à la matière thermoplastique de la gaine 48. On peut notamment utiliser les matériaux de remplissage classiques utilisés dans les câbles à fibres optiques.

Les logements 30 et 32 des éléments de renfort 40 et 42 sont diamétralement opposés ; les logements 34 et 36 des fibres optiques 44 et 46 sont également diamétralement opposés le long d'un plan diamétral perpendiculaire à celui d'alignement des logements 30 et 32. Les éléments de renfort 40 et 42 se font ainsi face de même que les fibres optiques 44 et 46.

Selon l'invention, les logements 30, 32, 34 et 36 communiquent entre eux de manière à former une croix 50 vide de matière thermoplastique et remplie de matériau d'enduction 505 à l'intérieur de la gaine 48. La croix 50 comprend donc quatre branches 500, 502, 504 et 506. L'une des extrémités de chacune de ces branches se termine respectivement par un logement 30, 32, 34 et 36, et l'autre extrémité rejoint celles des autres branches.

La figure 2 représente schématiquement la fabrication du câble 60 à l'aide d'une extrudeuse 10.

Les éléments de renfort 40 et 42 et les fibres 44 et 46 sont fournies à l'extrudeuse 10 à partir de tourets ou "émissions" 12, 14, 16, et 18. Avant d'être introduits dans l'extrudeuse 10, les éléments de renfort et les fibres optiques sont enduits à leur passage dans les cellules 20, 22, 24 et 26, d'un matériau d'enduction.

Les porteurs et fibres déjà enduits pénètrent dans l'extrudeuse 10 qui reçoit par une trémie 28 la matière thermoplastique destinée à former la gaine 48 du câble 60. La matière thermoplastique dans laquelle les porteurs et les fibres optiques ont été agencés de façon adéquate, est extrudée pour former le câble 60 après refroidissement et solidification.

Selon l'invention, on règle le débit du matériau d'enduction dans les cellules 20, 22, 24 et 26 en fonction de la pression de la matière thermoplastique dans l'extrudeuse 10, pour que cette pression soit telle que la matière thermoplastique refoule le matériau d'enduction vers les plans de symétrie du câble de manière à former sensiblement la partie centrale en forme de croix 50, et l'emprisonne dans cette partie centrale. Le matériau d'enduction des porteurs et des fibres optiques empêche ainsi les flux de matière thermoplastique liquide (à l'intérieur de l'extrudeuse) de se rejoindre au centre du câble.

Ainsi, la partie centrale 50 est vide de matière thermoplastique et remplie de matériau d'enduction 505. Elle constitue donc une amorce de rupture facilitant le dénudage ultérieur du câble.

Ceci permet la formation définitive, après refroidissement de la matière thermoplastique, du vide en forme de croix 50, dont les extrémités sont les logements des porteurs et des fibres optiques, rempli de matériau d'enduction 505. La forme particulière prise par la partie centrale 50 provient du fait que la matière thermoplastique pénètre de manière uniforme dans l'extrudeuse 10.

On a représenté en figure 2 une des variantes possibles d'un câble selon l'invention. Ce câble 70 comporte les mêmes éléments que le câble 60 de la figure 1. Toutefois, seules les fibres optiques 44 et 46 ont été enduites du matériau d'enduction 505, de sorte que la partie centrale 80 ne comprend que deux branches 804 et 806 et a sensiblement la forme d'un I.

Le câble 70 de la figure 2 peut être fabriqué de la même manière que le câble 60 de la figure 1.

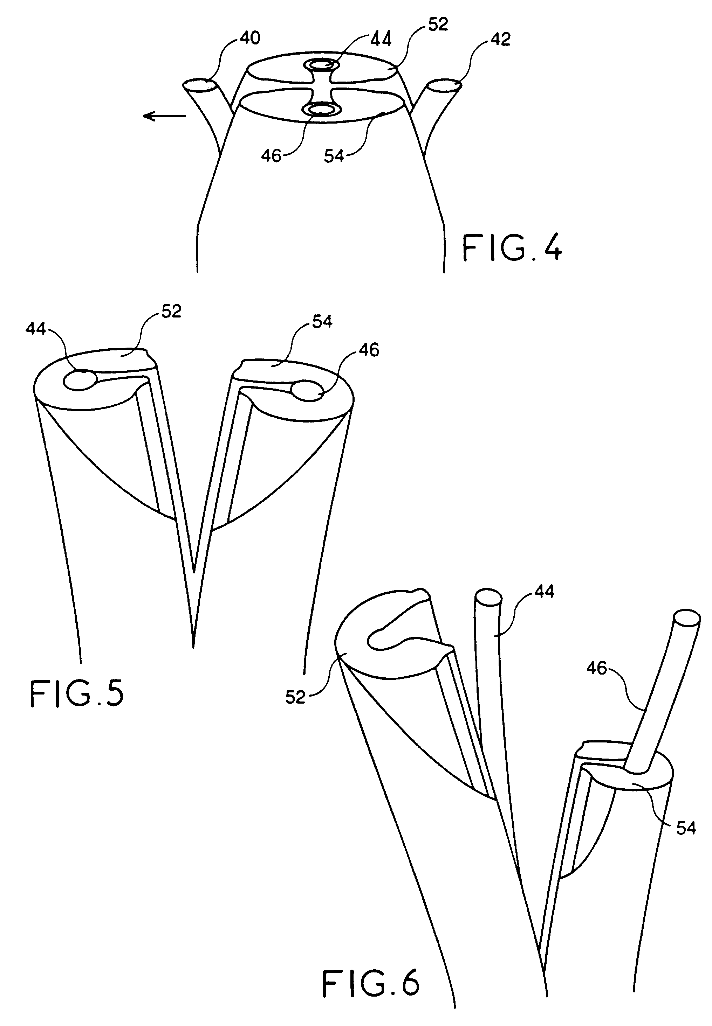

Le câble à fibres optiques tel qu'illustré sur la figure 1 permet, grâce à la partie centrale en forme de croix 50, de réduire les temps de raccordement grâce à un dénudage facile et rapide illustré sur les figures 4, 5 et 6.

Tout d'abord, les parties de matière thermoplastique recouvrant les porteurs 40, 42 sont retirées à l'aide d'un instrument tranchant. Ceci ne pose pas de problème dans la mesure où il n'est pas nécessaire de prendre de précautions vis-à-vis des porteurs. Puis, les porteurs 40 et 42 sont dégagés vers l'extérieur sur une longueur de quelques centimètres, tel qu'illustré sur la figure 4. Le dégagement des porteurs laisse alors apparaître deux parties de câble 52 et 54.

Puis, dans la deuxième étape illustrée sur la figure 5, on écarte l'une de l'autre les parois de la branche de croix 504, 506 aboutissant à chacun des fibres 44, 46. Ainsi, la partie 52 où se trouve la fibre optique 44 est ouverte de façon à libérer la fibre 44 comme le montre la figure 6. Il suffit ensuite d'éliminer par un instrument tranchant la partie de matière thermoplastique d'où la fibre optique a été dégagée pour avoir une longueur de fibre optique telle que 46 de quelques centimètres.

On voit donc que grâce à l'invention, le câble à deux fibres optiques obtenu peut être facilement et rapidement dénudé sans courir le risque d'endommager les fibres optiques dans la mesure où leur dégagement du câble peut se faire sans utiliser d'instrument.

De même, avec le câble de la figure 2, il suffit d'exercer un effort radialement sur les éléments de renfort 40 et 42, ce qui provoque une déchirure de la matière thermoplastique de la gaine 48 aux points faibles de cette dernière se trouvant entre les logements 34 et 36 et la périphérie de la gaine 48.

Bien que la description qui précède concerne un câble comportant deux éléments de renfort et deux fibres optiques, elle peut être généralisée sans sortir du cadre de l'invention à tout câble comportant au moins deux éléments, au moins un élément optique et au moins un élément de renfort. Ainsi, un câble selon l'invention peut comprendre une fibre optique et un élément de renfort, deux fibres optiques et un élément de renfort, ou bien encore quatre fibres optiques et deux porteurs, etc. Il est toutefois important pour la présente invention que d'une part tous les logements des éléments optiques (lorsqu'il y en a plus que deux) communiquent les uns avec les autres, et d'autre part au moins deux logements (quels qu'ils soient), communiquent l'un avec l'autre.

De même, les logements des fibres optiques peuvent contenir une ou plusieurs fibres optiques, ou un ou plusieurs rubans de fibres optiques. Pour généraliser, on a appelé élément optique une fibre optique, un ensemble de fibres optiques, un ruban de fibres optiques ou un ensemble de tels rubans contenu dans un logement du câble selon l'invention.

Les éléments, fibres optiques ou porteurs, sont disposés par exemple de façon à former approximativement un cercle, mais sans que les fibres optiques soient forcément face à face comme dans la figure 1. Durant le procédé de fabrication, et comme il a été mentionné plus haut, il se crée une partie centrale remplie de matériau d'enduction et vide de matière thermoplastique, comportant un nombre de branches correspondant au nombre logements communiquant les uns avec les autres (par exemple 4 dans le cas du câble 60 de la figure 1, et 2 dans le cas du câble 70 de la figure 2), chacune des branches étant bornée par un élément.

On doit noter que le procédé de fabrication selon l'invention peut s'appliquer non seulement aux câbles de branchement d'abonné, mais également à tous les câbles avec "protection" tels que câbles aériens, câbles enterrables...

## Revendications

1. Câble à fibres optiques comprenant au moins un élément optique (44, 46) et au moins un élément de renfort (40, 42) insérés dans des logements respectifs (30, 32, 34, 36) d'une gaine (48) en une matière thermoplastique, lesdits logements étant fermés vis-à-vis de l'extérieur du câble,
**caractérisé en ce que** tous les logements (34, 36) desdits éléments optiques (44, 46) sont en communication les uns avec les autres, au moins deux de tous lesdits logements communiquant l'un avec l'autre, et en ce que les éléments contenus dans les logements communiquant les uns avec les autres sont enduits d'un matériau d'enduction (505) empêchant leur adhérence à ladite gaine (48), de sorte que ladite gaine (48) définit une partie centrale (50 ; 80) à au moins deux branches (500, 502, 504, 506 ; 804, 806), vide de matière thermoplastique et remplie dudit matériau d'enduction (505), chacune desdites branches se terminant par l'un desdits logements en communication avec d'autres logements à l'une de ses extrémités, et ayant son autre extrémité qui rejoint celles des autres branches.

2. Câble selon la revendication 1 caractérisé en ce qu'il comporte deux éléments optiques (44, 46) et deux éléments de renfort (40, 42), ladite partie centrale (50) ayant la forme d'une croix à quatre branches (500, 502, 504, 506).

3. Câble selon la revendication 1 caractérisé en ce qu'il comporte deux éléments optiques (44, 46) et deux éléments de renfort (40, 42), et en ce que seuls les logements (30, 32) des éléments optiques (44, 46) communiquent les uns avec les autres, de sorte que la partie centrale a sensiblement la forme d'un I.

4. Procédé de fabrication d'un câble à fibres optiques selon l'une des revendications 1 à 3 à l'aide d'une extrudeuse (10), caractérisé en ce que l'on enduit les éléments optiques d'un matériau d'enduction, puis l'on extrude ladite matière thermoplastique, en réglant le débit dudit matériau d'enduction en fonction de la pression de la matière thermoplastique dans l'extrudeuse de manière à refouler ledit matériau d'enduction vers la partie centrale se trouvant entre lesdits logements et emprisonner ledit matériau d'enduction dans cette partie centrale à l'aide de la matière thermoplastique.

5. Procédé de dénudage de l'extrémité d'un câble selon l'une des revendications 1 ou 2, caractérisé en ce qu'il comprend les étapes suivantes :
- enlèvement de la matière thermoplastique recouvrant le ou lesdits éléments de renfort sur une longueur donnée de l'extrémité du câble de façon à pouvoir dégager lesdits éléments de renfort sur ladite longueur donnée de câble et constituer ainsi des parties (52, 54) de câble séparées sur ladite longueur donnée,
- séparation desdites parties de câble séparées de part et d'autre de la partie centrale se trouvant entre lesdits éléments de renfort,
- dégagement dans chacune desdites parties de câble, des extrémités des éléments optiques en écartant les deux bords de la partie vide de matière thermoplastique emprisonnant lesdits éléments optiques, et
- élimination de la matière thermoplastique sur ladite longueur donnée de façon à disposer des extrémités dénudées desdites éléments optiques sur ladite longueur donnée.
